(19) **Europäisches Patentamt / European Patent Office / Office européen des brevets**

(11) **EP 3 537 551 B1**

(12) **FASCICULE DE BREVET EUROPEEN**

(45) Date de publication et mention
de la délivrance du brevet:
**03.11.2021 Bulletin 2021/44**

(51) Int Cl.:
***H02H 9/02*** *(2006.01)*

(21) Numéro de dépôt: **19153657.2**

(22) Date de dépôt: **25.01.2019**

(54) **CIRCUIT DE PROTECTION CONTRE LES SURTENSIONS ET APPAREIL ÉLECTRIQUE COMPORTANT AU MOINS UN TEL CIRCUIT DE PROTECTION**

SCHUTZSCHALTKREIS GEGEN ÜBERLASTSPANNUNG, UND ELEKTRISCHES GERÄT, DAS MINDESTENS EINEN SOLCHEN SCHUTZSCHALTKREIS UMFASST

CIRCUIT FOR PROTECTION AGAINST VOLTAGE SURGES AND ELECTRICAL APPLIANCE COMPRISING AT LEAST ONE SUCH PROTECTION CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2018 FR 1851874**

(43) Date de publication de la demande:
**11.09.2019 Bulletin 2019/37**

(73) Titulaire: **Schneider Electric Industries SAS
92500 Rueil Malmaison (FR)**

(72) Inventeurs:
• **LI, Bo
38050 Grenoble Cedex 09 (FR)**

• **WANG, Miao-Xin
38050 Grenoble Cedex 09 (FR)**

(74) Mandataire: **Colette, Marie-Françoise et al
Schneider Electric Industries SAS
Propriété Industrielle
160, avenue des Martyrs
38000 Grenoble (FR)**

(56) Documents cités:
**EP-A1- 2 645 569       WO-A1-93/07666
WO-A1-2010/020898   US-A- 3 760 228
US-A- 5 208 494**

**Description**

**DOMAINE TECHNIQUE**

La présente invention concerne un circuit de protection contre des surtensions comportant une entrée destinée à être connectée à une source d'énergie électrique et une sortie destinée à être connectée à un dispositif à protéger contre les surtensions. L'invention concerne également un appareil électrique de mesure ou d'alimentation comportant au moins un tel circuit de protection contre les surtensions.

**ETAT DE LA TECHNIQUE**

De nombreux équipements électriques sont connectés au réseau électrique pour leur alimentation en énergie. Ces équipements sont alors soumis à des perturbations, transmises par le réseau électrique. Parmi les perturbations, on compte les surtensions pouvant être d'origine naturelle, telle qu'un choc de foudre, ou engendrées par une manœuvre d'un équipement électrique telle que la commande d'une charge inductive, par exemple un moteur. Les surtensions transmises sur le réseau électrique pouvant être très énergétiques, il convient de protéger les équipements électriques pour éviter leur dégradation. Cette protection porte principalement sur une tenue à l'amplitude de la surtension et sur la dissipation de l'énergie contenue dans ladite surtension. Des composants de type varistance sont souvent utilisés pour dissiper l'énergie des surtensions avec l'inconvénient d'une durée de vie limitée d'autant plus que le nombre et l'énergie des perturbations est important. Des composants actifs, tels que des transistors, sont aussi utilisés. Actuellement, les transistors disposent d'une tenue en tension inférieure à 2 kV ce qui est insuffisant pour tenir aux surtensions d'amplitude comprise entre 6 et 8 kV, classiquement mesurées lors de chocs de foudre. Une association de plusieurs transistors et varistances est donc nécessaire avec des contraintes sur le temps de réponse de l'ensemble, tous les composants actifs devant réagir simultanément, en particulier sur des fronts raides de tension, et des contraintes sur la nécessaire dissipation de l'énergie contenue dans la surtension.

On connait le document EP 0 497 478 A2 relatif à un circuit de protection destiné à protéger contre des surtensions des entrées d'un appareil de mesure. Un tel dispositif met en œuvre des transistors MOSFET pouvant être associés en série afin d'atteindre une tenue en tension supérieure à la tenue en tension d'un seul MOSFET. Cependant le circuit de protection nécessite des transistors bipolaires rapides pour décharger les capacités parasites entre grille et source des transistors MOSFET et permettre un blocage très rapide des transistors en cas de pic de surtension. D'autre part, la mise en série de plusieurs étages pour augmenter la tenue en tension, augmente la résistance série du circuit. Ceci n'est pas un inconvénient pour une entrée de mesure mais un tel circuit ne peut être utilisé en tant que protection de l'alimentation d'un circuit, l'énergie dissipée dans les résistances série pouvant être excessive.

On connait le document WO 2006 / 129 005 A1 relatif à un dispositif de protection comportant une association de moyens de limitation de courant placés en série entre le réseau électrique et le circuit électrique à protéger et de moyens de limitation placés en parallèle pour dériver un courant de perturbation en dehors du circuit à protéger. Plusieurs étages sont nécessaires pour écrêter les surtensions sans dissiper trop d'énergie, chaque étage ayant des caractéristiques de tenue en tension différentes.

On connait également les documents EP 2 124 310 A1 et EP 2 124 326 A1 destinés à protéger une alimentation de type capacitive contre les surtensions. Les documents décrivent l'association de deux transistors à effet de champ normalement fermés, montés en série et fonctionnant en limitation de courant. Une diode transil bidirectionnelle est montée en parallèle pour dériver une partie du courant de perturbation en dehors du circuit à protéger. L'utilisation d'un moyen de limitation du courant de perturbation, placé en série, permet de limiter l'énergie dissipée dans le moyen de limitation placé en parallèle. De cette façon la durée de vie de la diode transil est augmentée.

On connaît également le document US 3760228 A, qui divulgue un circuit de protection contre les surtensions comprenant un transistor dans la voie du courant à limiter et un autre transistor ayant une fonction de contrôle.

Les dispositifs connus de l'art antérieur ne décrivent pas de circuit bénéficiant simultanément d'une tenue aux surtensions d'amplitude supérieure à plusieurs fois la tenue en tension d'un seul transistor, d'une limitation du courant circulant dans le dispositif tout en garantissant une résistance série faible en fonctionnement normal et d'un temps de réponse extrêmement rapide.

**EXPOSE DE L'INVENTION**

L'invention a pour but un circuit de protection évitant les inconvénients des dispositifs de l'état de la technique, de conception simple et facile à adapter au niveau de surtension attendu.

Pour cela, l'invention décrit, un circuit de protection d'une charge électrique destiné à être connecté en série entre une source d'énergie électrique et la charge électrique à protéger, la source d'énergie électrique fournissant un courant électrique à la charge électrique, ledit circuit de protection comportant :

- une entrée de connexion du circuit de protection à la source d'énergie électrique,
- une sortie de connexion à la charge électrique,
- un circuit générateur de tension de référence agencé pour fournir au moins une première tension de référence,
- un circuit de limitation de courant, connecté à la sortie, ledit circuit de limitation étant agencé pour limiter le courant électrique le traversant,
- un premier module de contrôle de courant, connecté en série d'une part avec le circuit de limitation en un premier point de connexion et d'autre part connecté à l'entrée, ledit premier module de contrôle de courant comportant :

  - un premier circuit de contrôle de courant pour contrôler l'amplitude du courant électrique le traversant, et
  - un premier circuit d'équilibrage connecté au générateur de tension pour recevoir la première tension de référence et connecté au premier point de connexion pour recevoir une première tension, le premier circuit d'équilibrage étant agencé pour commander le premier circuit de contrôle de courant pour que la première tension soit sensiblement égale à la première tension de référence.

Le circuit de limitation de courant comporte, au moins, un premier transistor à effet de champ de type normalement fermé et une première résistance série connectée entre la grille et la source du premier transistor à effet de champ, le drain étant connecté au premier point de connexion, la grille étant connectée à la sortie de connexion du circuit de protection.
Le premier module de contrôle de courant comporte, au moins :

- un deuxième transistor à effet de champ de type normalement fermé et une deuxième résistance série connectée entre la grille et la source du deuxième transistor à effet de champ, le drain étant connecté à l'entrée de connexion du circuit de protection, et
- un premier transistor bipolaire de type NPN connecté de telle sorte que :

  - le collecteur du premier transistor bipolaire soit connecté à la source du deuxième transistor à effet de champ,
  - l'émetteur du premier transistor bipolaire soit connecté à la grille du deuxième transistor à effet de champ et au premier point de connexion, et que
  - la base du premier transistor bipolaire soit connectée au générateur de tension de référence pour recevoir la première tension de référence.

Le premier transistor bipolaire peut être remplacé par un transistor type MOSFET connecté de telle sorte que :

- le drain du premier transistor MOSFET soit connecté à la source du deuxième transistor à effet de champ
- la source du premier transistor MOSFET soit connecté à la grille du deuxième transistor à effet de champ et au premier point de connexion, et que
- la grille du premier transistor MOSFET soit connectée au générateur de tension de référence pour recevoir la première tension de référence (Vref1)

De préférence, le premier et le deuxième transistors à effet de champ sont fabriqués en carbure de silicium ou en nitrure de gallium.
Avantageusement, le circuit générateur de tension de référence est relié d'une part à l'entrée de connexion du circuit de protection à la source d'énergie électrique et d'autre part à la sortie de connexion du circuit de protection à la charge électrique. Préférentiellement, le circuit générateur de tension de référence comporte une première et une deuxième résistances, connectées en série, de valeur sensiblement égale, et la première tension de référence est fournie en un deuxième point de connexion entre la première et la deuxième résistance.
De préférence, le circuit de limitation de courant limite le courant à une amplitude comprise entre 50 et 500 mA.
De manière avantageuse, le circuit de protection contre les surtensions est tel que:

- le générateur de tension de référence génère une deuxième tension de référence, d'amplitude supérieure à la première tension de référence, et tel que :
- un deuxième module de contrôle de courant est connecté en série d'une part avec le premier module de contrôle de courant en un troisième point de connexion, et connecté d'autre part à l'entrée, ledit deuxième module de contrôle de courant comportant :

  - un deuxième circuit de contrôle de courant pour contrôler l'amplitude du courant électrique le traversant, et
  - un deuxième circuit d'équilibrage connecté d'une part au générateur de tension de référence pour recevoir la deuxième tension de référence et connecté d'autre part au troisième point de connexion pour recevoir une deuxième tension, le deuxième circuit d'équilibrage étant agencé pour commander le deuxième circuit de contrôle de courant pour que la tension au troisième point de connexion soit sensiblement égale à la deuxième tension de référence.

Avantageusement, le circuit de protection est tel que :

- le générateur de tension de référence génère N tensions de référence d'amplitude décroissante, N étant supérieur ou égal à 2, et tel que
- le circuit de protection comprend N modules de contrôle de courant connectés en série entre l'entrée et le deuxième module de contrôle de courant, chaque module de contrôle de courant comportant une entrée de liaison et une sortie de liaison, la sortie de liaison d'un module de contrôle de courant étant connectée à une entrée de liaison d'un module de contrôle de courant adjacent, chaque module de contrôle de courant recevant une tension de référence en correspondance avec son ordre de connexion, chaque module de contrôle de courant contrôlant le courant électrique le traversant pour que la tension sur sa sortie soit sensiblement égale à la tension de référence.

L'invention concerne également un appareil électrique de mesure ou d'alimentation comportant des bornes de connexion à une source d'énergie électrique et une charge électrique à protéger, ladite charge comportant des entrées de mesure ou d'alimentation, ledit appareil électrique comportant au moins un circuit de protection contre les surtensions tel que décrit précédemment, ledit, au moins un, circuit de protection étant connecté entre une borne de connexion à la source d'énergie électrique et une entrée de mesure ou d'alimentation de la charge électrique, pour protéger l'entrée de mesure ou d'alimentation de la charge électrique contre les surtensions transmises par la source d'énergie électrique.

**BREVE DESCRIPTION DES DESSINS**

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- la figure 1 est un schéma bloc pour illustrer un principe de fonctionnement d'un circuit de protection selon l'invention,
- la figure 2 est un schéma d'un circuit de protection, selon un mode de réalisation préférentiel, en correspondance avec le schéma bloc de la figure 1,
- la figure 3 représente un schéma bloc d'un circuit de protection pour illustrer une adaptation à une tension élevée d'une onde électrique d'une perturbation,
- la figure 4 représente un schéma de réalisation d'un circuit de protection en correspondance avec le schéma bloc de la figure 3,
- la figure 5 représente un schéma bloc d'un circuit de protection pour illustrer une adaptation modulaire du circuit de protection à une tension élevée d'une onde d'une perturbation,
- la figure 6 est un schéma d'un mode de réalisation d'un circuit de protection comportant plusieurs modules d'adaptation à une tension élevée d'une onde d'une perturbation,
- la figure 7 est un schéma d'une variante de réalisation du circuit de protection d'un circuit de protection comportant plusieurs modules d'adaptation,
- la figure 8 représente un schéma d'implantation de deux circuits de protection dans un appareil électrique comportant un dispositif à protéger contre les surtensions, et
- la figure 9 représente un schéma d'implantation de quatre circuits de protection dans un appareil électrique comportant un dispositif à protéger contre les surtensions, alimenté par une source d'énergie triphasée.

**DESCRIPTION DETAILLEE DE MODES DE REALISATION PREFERES**

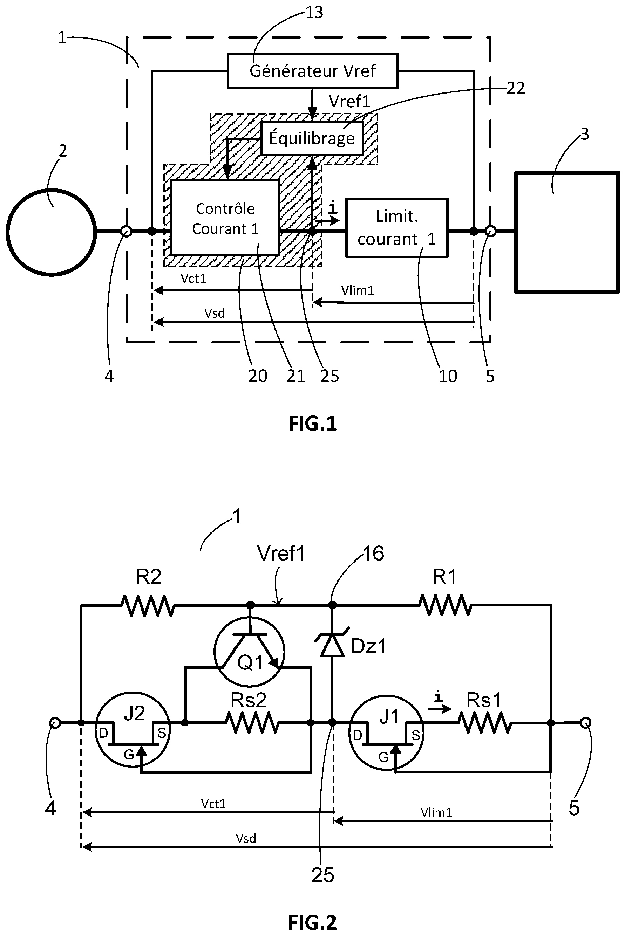

La figure 1, est un schéma bloc pour illustrer un principe de fonctionnement d'un circuit de protection 1 selon l'invention. Un tel circuit de protection 1 comporte une entrée 4 destinée à être connectée à une source d'énergie électrique 2. La source d'énergie électrique 2 est également source de perturbations électriques telles que des surtensions et des ondes de foudre. Le circuit de protection 1 comporte une sortie 5 destinée à être connectée à une charge électrique 3 à protéger des perturbations électriques émises par la source d'énergie 2. Un courant **i** circule entre la source d'énergie électrique 2 et la charge électrique 3 afin d'alimenter la charge électrique en énergie électrique. Le courant **i** traverse le dispositif de protection 1.

Le circuit de protection 1 comporte un circuit de limitation de courant 10 connecté, d'une part, à la sortie 5, et, d'autre part, à un premier circuit de contrôle de courant 21. Le premier circuit de contrôle de courant 21 est connecté à l'entrée 4. Le circuit de limitation de courant 10 et le premier circuit de contrôle de courant 21 sont connectés entre eux en un premier point de connexion 25 et connectés en série entre l'entrée 4 et la sortie 5. Le circuit de limitation de courant 10 et le premier circuit de contrôle de courant 21 sont traversés par le courant **i** et agencés pour limiter ou contrôler l'amplitude du courant **i** qui circule entre l'entrée 4 et la sortie 5. Ils se comportent comme des résistances variables dynamiquement : le circuit de limitation de courant 10 ajuste sa résistance interne afin que le courant **i** ne dépasse pas une amplitude maximale I_lim1 et le premier circuit de contrôle de courant 21 limite l'amplitude du courant **i** en fonction d'une commande générée par un premier circuit d'équilibrage 22. Le premier circuit de contrôle de courant 21 et le premier circuit d'équilibrage 22 forment un premier module de contrôle de courant 20.

Pour clarifier la description, la sortie 5 sera considérée dans la suite du document comme un point de référence zéro de potentiel. Bien évidemment, tout autre point de référence peut être pris en compte. Un générateur de tension de référence 13 est connecté entre l'entrée 4 et la sortie 5. Ce générateur est destiné à fournir une première tension de référence, Vref1, par rapport au potentiel de la sortie 5. Un premier circuit d'équilibrage 22 est connecté d'une part, au générateur de tension de référence 13 pour recevoir la première tension de référence Vref1 et connecté d'autre part au premier point de connexion 25 entre le circuit de limitation de courant 10 et le premier circuit de contrôle de courant 21 pour recevoir une tension Vlim1 au premier point de connexion 25. Le premier circuit d'équilibrage 22 est également connecté au premier circuit de contrôle de courant 21 pour commander ledit premier circuit de contrôle de courant 21. Le premier circuit d'équilibrage 22 est agencé pour comparer la première tension de référence Vref1 et la tension Vlim1 au premier point de connexion 25 et pour commander le premier circuit de contrôle de courant 21 afin que la tension Vlim1 au premier point de connexion 25, c'est à dire au point de connexion entre le circuit de limitation de courant 10 et le premier circuit de contrôle de courant 21, soit sensiblement égale à la première tension de référence Vref1. On entend par « sensiblement égale », le fait que la commande du premier circuit de contrôle de courant 21 tend à rendre la tension Vlim1 au premier point de connexion 25 égale à la tension Vref1 en dépit des variations du courant **i** et donc des variations de la tension au premier point de connexion 25. En effet, la commande du premier circuit de contrôle de courant 21 fait partie d'une boucle de régulation dont le fonctionnement est détaillé ci-après : quand une surtension Vsd générée par la source 2 apparait entre l'entrée 4 et la sortie 5, le courant **i** circule entre l'entrée 4 et la sortie 5 via le circuit de limitation de courant 10 et le premier circuit de contrôle de courant 21. La surtension Vsd se répartit en la tension Vlim1 aux bornes du circuit de limitation de courant 10 et une tension Vct1 aux bornes du premier circuit de contrôle de courant 21. Le premier circuit de limitation de courant a pour fonction de limiter le courant **i** à la valeur limite prédéfinie I_lim1. Pour cela, le circuit de limitation de courant 10 augmente sa résistance interne quand le courant **i** tend à dépasser I_lim1 et minimise sa résistance interne quand le courant **i** est inférieur à I-lim1. Le premier circuit de contrôle de courant 21 limite le courant **i** de manière contrôlée par le premier circuit d'équilibrage 22 : le premier circuit d'équilibrage 22 commande le premier circuit de contrôle de courant 21 pour que ledit circuit adapte sa résistance interne de façon à ce que la tension Vlim1 soit égale à Vref1. La tension Vct1, aux bornes du premier circuit de contrôle de courant 21, est égale à Vsd - Vlim1. Ce fonctionnement est synthétisé par les deux relations suivantes :

$$Vlim1 = Vref1$$

$$Vct1 = Vsd - Vlim1 => Vct1 = Vsd - Vref1$$

En choisissant judicieusement Vref1 = Vsd / 2, le circuit de protection 1 assure en permanence la relation Vlim1 = Vct1. Ainsi, quelle que soit la tension Vsd apparaissant entre l'entrée 4 et la sortie 5, la tension Vsd est répartie à égalité entre le circuit de limitation de courant 10 et le premier circuit de contrôle de courant 21.

La figure 2 est un schéma d'un circuit de protection 1, selon un mode de réalisation préférentiel. Le générateur de tension de référence 13 est réalisé au moyen d'une première résistance R1 et d'une deuxième résistance R2 connectées en série entre l'entrée 4 et la sortie 5, formant ainsi un diviseur de tension. La première et la deuxième résistances R1 et R2 ont une valeur sensiblement égale. Une première extrémité de la première résistance R1 est connectée à la sortie 5, une première extrémité de la deuxième résistance R2 est connectée à l'entrée 4. Les deuxièmes extrémités des première et deuxième résistances R1 et R2 sont connectées entre elles en un deuxième point de connexion 16 fournissant la première tension de référence Vref1.

Le circuit de limitation de courant 10 est réalisé au moyen d'un premier transistor FET J1 dont la source est connectée à une première extrémité d'une première résistance série Rs1. La seconde extrémité de la première résistance série Rs1 ainsi que la grille du premier transistor FET J1 sont connectées à la sortie 5 du circuit de protection 1. Le premier transistor FET J1 est un transistor à effet de champs, canal N, conducteur quand la tension entre grille et source est nulle. Quand un courant i circule dans la première résistance série Rs1, dans le sens indiqué par la flèche sur la figure 2, la tension grille-source de J1 diminue en suivant la loi d'Ohm. A titre d'exemple, à partir d'une tension de l'ordre de - 7 Volt, la résistance drain-source de J1 augmente ce qui produit une limitation du courant **i**. En choisissant une première résistance série Rs1 d'une valeur de 20 Ohm, le courant **i** est limité à 350 mA par le circuit de limitation de courant 10.

Le premier circuit de contrôle de courant 21 est réalisé sur une base de schéma équivalente au circuit de limitation 10. La source d'un deuxième transistor FET J2 est connectée à une première extrémité d'une deuxième résistance série Rs2. La seconde extrémité de la deuxième résistance série Rs2 est connectée au drain du premier transistor FET J1, ladite connexion formant le premier point de connexion 25. La grille du deuxième transistor FET J2 est connectée au premier point de connexion 25. Le drain du deuxième transistor FET J2 est connecté à l'entrée 4 du circuit de protection 1.

Le premier circuit d'équilibrage 22 est constitué d'un premier transistor bipolaire Q1 et d'une première diode zener Dz1. Le premier transistor bipolaire Q1 est de type bipolaire NPN mais peut également être de type MOSFET. Le collecteur du premier transistor bipolaire Q1 est connecté à la première extrémité de la deuxième résistance série Rs2, l'émetteur du transistor bipolaire Q1 est connecté à la seconde extrémité de la deuxième résistance série Rs2, la base du transistor Q1 est connectée au deuxième point de connexion 16 délivrant la première tension de référence Vref1. Une première diode zener Dz1 est connectée en parallèle sur la jonction base-émetteur de Q1 dans le sens anode de la diode Dz1 connectée à l'émetteur du transistor Q1 et cathode de la diode Dz1 connectée à la base du transistor Q1. La première diode zener Dz1 protège la jonction base-émetteur du premier transistor bipolaire Q1 contre une tension inverse supérieure à la tension base-émetteur inverse maximale que peut supporter le transistor Q1. La première diode zener Dz1, bien que souhaitée, est optionnelle. Quand la tension Vlim1 est inférieure à Vref1, la tension entre base et émetteur du premier transistor bipolaire Q1 augmente entraînant une augmentation du courant dans le collecteur. Une partie du courant circulant dans la deuxième résistance série Rs2 est dérivé dans le premier transistor bipolaire Q1. La tension aux bornes de la deuxième résistance série Rs2 diminue et par conséquent la tension entre grille et source du deuxième transistor FET J2 diminue également. La résistance interne du premier transistor bipolaire Q1 diminue ce qui a pour conséquence une augmentation du courant **i** et, par conséquent une augmentation de la tension Vlim1. Un effet inverse se produisant quand la tension Vlim1 est supérieure à Vref1, il y a ainsi un effet de régulation afin que Vlim1 soit toujours sensiblement égal à Vref1. Compte tenu des disparités sur les paramètres des premier et deuxième transistors J1 et J2 et des tolérances de fabrication sur la valeur des première et deuxième résistances Rs1 et Rs2, préférentiellement on choisit une valeur pour Rs2 supérieure à deux fois la valeur de la première résistance série Rs1, afin que la tension Vct1 soit par défaut toujours supérieure à Vlim1 et que le premier transistor bipolaire Q1 puisse effectuer un équilibrage entre Vref1 et Vlim1 avec une latitude suffisante.

Préférentiellement, Rs1 = 20 Ohm pour une limitation à 400 mA du courant **i.**

De préférence, le premier et le deuxième transistor FET J1 et J2 sont des transistors à effet de champ JFET ou MOSFET à déplétion. Ils sont caractérisés par une fabrication dans un matériau à grande énergie de bande interdite tel que le carbure de silicium ou le nitrure de gallium.

Le circuit de limitation de courant 10 représenté sur la figure 2 est non ajustable. Il peut être rendu ajustable en utilisant un schéma identique à celui du premier circuit de contrôle de courant 21 et en fournissant une tension de référence particulière. Un circuit de limitation de courant ajustable permet de maîtriser précisément la valeur de limitation du courant **i.**

Le circuit de protection de l'invention 1 nécessite l'utilisation de deux transistors J1 et J2 connectés en série, ce qui présente tout son intérêt quand l'amplitude Vsd de la surtension est supérieure à la tenue en tension maximale entre source et drain d'un seul des premier ou deuxième transistor J1 ou J2. Typiquement, la tenue en tension maximale entre source et drain d'un transistor FET J1 ou J2 est de 1 200 Volt alors que les surtensions attendues peuvent varier de 2 kV à 8 kV. Cependant, il ne suffit pas de connecter en série plusieurs transistors J1, J2 pour tenir une tension élevée : du fait de la non homogénéité des composants, le circuit de limitation de courant 10 ou le premier circuit de contrôle de courant 21 ayant le courant de limitation le plus faible devra tenir toute la tension entre ses bornes. C'est pourquoi une répartition équilibrée de la surtension sur les premier et le deuxième transistor FET, J1 et J2, grâce au circuit d'équilibrage 22, permet une tenue en tension, sans risque, jusqu'à la somme des tensions maximales entre source et drain des transistors J1 et J2, par exemple 2 400 Volt dans l'exemple présent. Cet avantage permet une réalisation d'un circuit de protection comportant autant de circuits de contrôle de tension que nécessaire afin de tenir l'amplitude de la surtension nécessaire sans risque de destruction d'un transistor par effet d'avalanche.

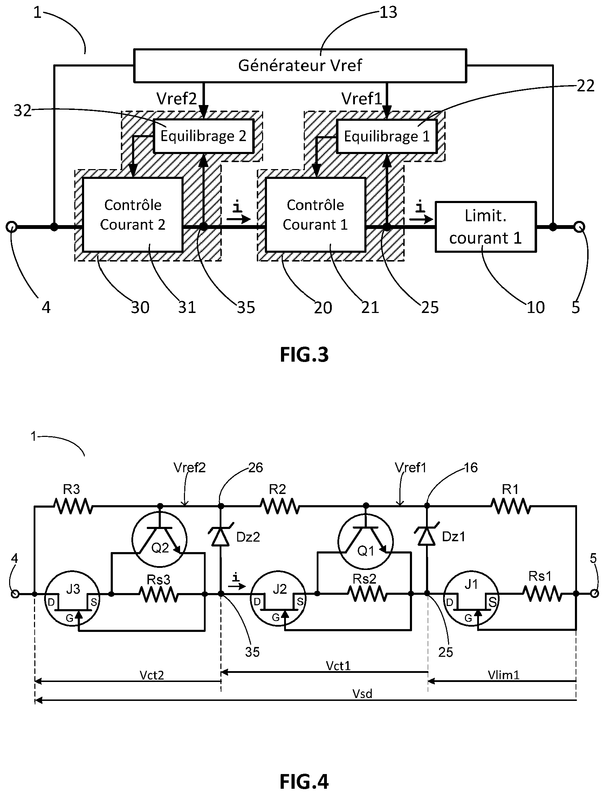

La figure 3 représente un schéma bloc d'un circuit de protection comportant un circuit de limitation de courant 10 et deux circuits de contrôle de courant pour illustrer une adaptation à une surtension Vsd d'amplitude égale à trois fois la tension maximale entre source et drain d'un transistor FET J1 ou J2. Le générateur de tension de référence 13 génère une deuxième tension de référence Vref2. Préférentiellement, la première tension de référence Vref1 sera choisie égale à 1/3 x Vsd et la deuxième tension de référence Vref2 sera choisie égale à 2/3 x Vsd.

Le circuit de protection 1 comporte au moins un deuxième circuit de contrôle de courant 31 intercalé en série entre l'entrée 4 et le premier circuit de contrôle de courant 21, ainsi que représenté sur la figure 3. Un deuxième circuit d'équilibrage 32 est connecté au générateur de tension de référence 13 pour recevoir la deuxième tension de référence Vref2. Le deuxième circuit d'équilibrage 32 est également connecté à un troisième point de connexion 35 entre le premier circuit de contrôle de courant 21 et le deuxième circuit de contrôle de courant 31.

Le deuxième circuit d'équilibrage 32 est agencé pour commander le deuxième circuit de contrôle de courant 31 pour que la tension au troisième point de connexion 35 entre le premier circuit de contrôle de courant 21 et le deuxième circuit de contrôle de courant 31 soit sensiblement égale à la deuxième tension de référence Vref2. Le fonctionnement est identique au fonctionnement décrit précédemment : la tension Vsd est répartie à égalité entre le circuit de limitation de courant 10, le premier circuit de contrôle de courant 21 et le deuxième circuit de contrôle de courant 31. Le deuxième circuit de contrôle de courant 31 et le deuxième circuit d'équilibrage 32 forment un deuxième module de contrôle de courant 30. La figure 4 représente un schéma de réalisation d'un circuit de protection 1 en correspondance avec le schéma bloc de la figure 3. Le générateur de tension de référence 13 est réalisé au moyen de la première résistance R1, de la deuxième résistance R2 et d'une troisième résistance R3, les trois résistances étant connectées en série entre l'entrée 4 et la sortie 5 pour former un diviseur de tension. La première, la deuxième et la troisième résistances R1, R2 et R3 ont préférentiellement une valeur sensiblement égale. Le deuxième circuit de contrôle de courant 31 est composé d'une troisième résistance série Rs3 et d'un troisième transistor FET, J3. Le deuxième circuit d'équilibrage 32 est constitué d'un deuxième transistor bipolaire Q2 et d'une deuxième diode zener Dz2, connectée en parallèle sur la jonction base-émetteur de Q2. La valeur de la troisième résistance série Rs3 est choisie telle que Rs3 >= 2 x Rs1 afin que la tension Vct2 aux bornes du troisième circuit de limitation de courant 31 soit par défaut toujours supérieure à Vlim1. Un montage, tel que représenté en figure 4, est dimensionné pour tenir des surtensions d'amplitude 4 kV en utilisant des transistor FET J1, J2 et J3 supportant une tension maximale entre source et drain de 1 500 Volt.

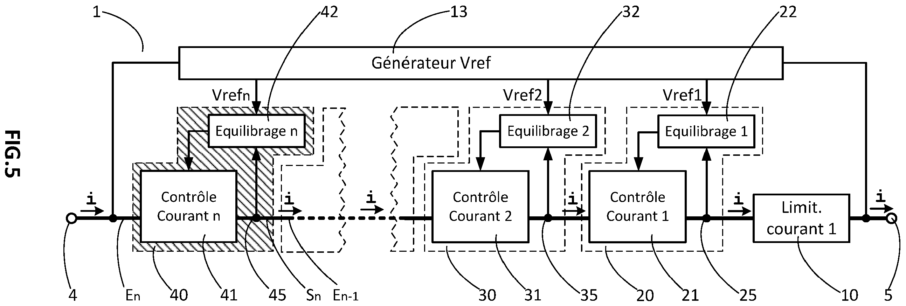

D'une façon plus générale, il est possible d'augmenter la tenue aux surtensions du circuit de protection 1 en ajoutant autant de modules de contrôle de courant que nécessaire. Un tel circuit de protection 1, représenté sous forme d'un schéma bloc en figure 5, est constitué des éléments suivants :

- un circuit de limitation de courant 10 tel que décrit précédemment,
- un circuit générateur de tensions de référence 13 pour générer N tensions de référence $Vref1,..,Vref_n$,
- N modules de contrôle de courant 20, 30, 40, chaque module de contrôle de courant comportant une entrée E1, E2, En, et une sortie S1, S2, Sn, et comprenant :
- un circuit de contrôle de courant 21, 31, 41, et
- un circuit d'équilibrage 22, 32, 42 connecté d'une part au générateur de tensions de référence 13 pour recevoir une tension de référence $Vref1$, $Vref2$, $Vref_n$ et connecté d'autre part à la sortie S1, S2, Sn du module de contrôle de courant 20, 30, 40, ledit circuit d'équilibrage 22, 32, 42 étant agencé pour commander le circuit de contrôle de courant 21, 31, 41 pour que la tension à la sortie du module de contrôle S1, S2, Sn soit sensiblement égale à la tension de référence $Vref1$, $Vref2$, $Vref_n$,

Les N tensions de référence $Vref1$, $Vref2,..,Vref_n$, sont préférentiellement générées par division de la tension entre l'entrée 4 et la sortie 5 par N +1 : pour cela, un pont diviseur est préférentiellement utilisé, constitué de N+1 résistances de valeur sensiblement identiques R1, R2, R3, ..., $R_{N+1}$, connectées en série entre l'entrée 4 et la sortie 5. Chacune des N tensions de référence $Vref_n$ est prélevée au point de connexion entre la Nième résistance et la N+1$^{ième}$ résistance. Ainsi

$$Vref1 < Vref2 <....< Vref_{n-1} < Vref_n.$$

Le circuit de limitation de courant 10 et les N modules de contrôle de courant sont connectés en série entre l'entrée 4 et la sortie 5 du circuit de protection 1 dans un ordre correspondant avec l'amplitude des tensions de référence $Vref1, .., Vref_n$ : le module de courant 41 dont l'entrée En est connectée à l'entrée 4 du circuit de protection, reçoit la tension de référence d'amplitude la plus élevée, $Vref_n$, un module de contrôle de courant de rang N-1 reçoit la tension de référence d'amplitude immédiatement inférieure, $Vref_{n-1}$ et ainsi de suite, jusqu'au module 20 de contrôle de courant de rang 1 qui reçoit la tension de référence Vref1.

Pour tenir une surtension d'amplitude 8 kV en associant des modules de contrôle de courant 41 dont la tenue unitaire est de 1 500 V, il est nécessaire d'utiliser 8000 / 1500 = 5,3 modules. En pratique, un circuit de protection 1 répondant à une telle spécification comportera un circuit de limitation de courant 10 connecté en série avec cinq modules de contrôle de courant 20, 30, 40.

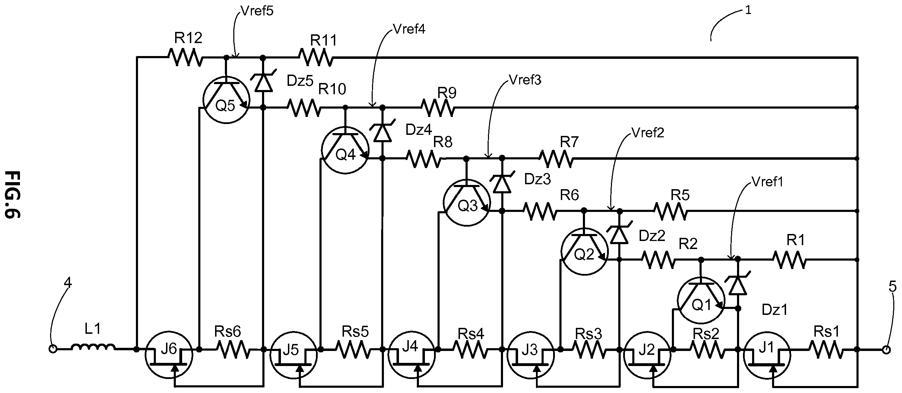

La figure 6 est un schéma d'un mode de réalisation d'un circuit de protection 1 comportant un circuit de limitation de courant 10 et cinq modules de contrôle de courant 20, 30, 40. Le circuit générateur de tension de référence 13 est représenté sous forme d'une variante de réalisation : il est constitué des résistances R1, R2, R5, R6, R7, R8, R9, R10, R11 et R12. La première tension de référence, Vref1 est délivrée au point de connexion entre les résistances R1 et R2. La deuxième tension de référence, Vref2 est délivrée au point de connexion entre les résistances R5 et R6 et ainsi de suite. Afin que les valeurs des tensions de références Vref1, Vref2, Vref3, Vref4 et Vref5 soient correctement et uniformément réparties, la valeur des résistances du générateur de tension de référence 13 est choisie de la façon suivante :

$$R1 = R2 = R6 = R8 = R10 = R12,$$

$$R5 = 2 \times R1,$$

$$R7 = 3 \times R1,$$

$$R9 = 4 \times R1,$$

et

$$R11 = 5 \times R1.$$

On retrouve le premier circuit de limitation de courant 10, les premier et deuxième circuits de contrôle du courant 21, 31 ainsi que les premier et deuxième circuits d'équilibrage 22, 32 décrits précédemment. Un troisième module de contrôle de courant est constitué d'un quatrième transistor JET J4, d'une quatrième résistance série Rs4, d'un troisième transistor bipolaire Q3 et d'une troisième diode zener Dz3. Un quatrième module de contrôle de courant est constitué d'un cinquième transistor JET J5, d'une cinquième résistance série Rs5, d'un quatrième transistor bipolaire Q4 et d'une quatrième diode zener Dz4. Enfin, un cinquième module de contrôle de courant est constitué d'un sixième transistor JET J6, d'une sixième résistance série Rs6, d'un cinquième transistor bipolaire Q5 et d'une cinquième diode zener Dz5. Une inductance L1 est connectée en série entre l'entrée 4 et le drain du transistor JFET J6 pour atténuer la raideur du front de montée du courant i induit par une apparition brusque de surtension. Cette variante offre une très bonne réponse sur des fronts brusques de l'onde de surtension apparaissant entre l'entrée 4 et la sortie 5 et une très bonne tenue en tension élevée.

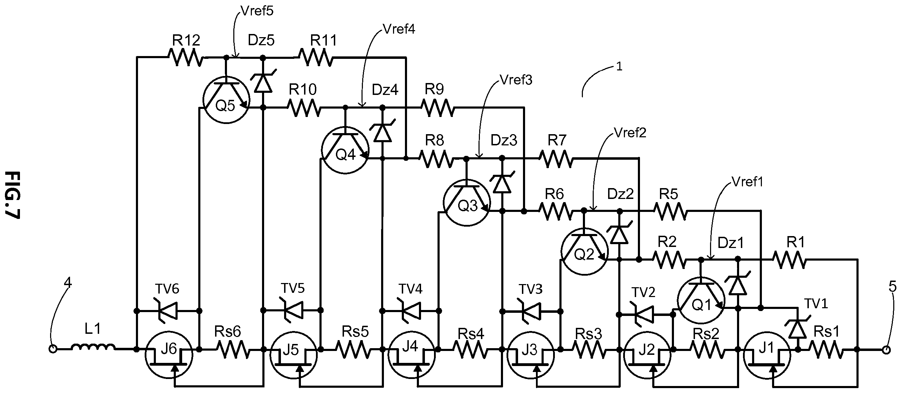

D'autres variantes peuvent être utilisées telle que représentée en figure 7 : dans ce mode de réalisation, les résistances formant le générateur de tension de référence sont de même valeur :

$$R1 = R2 = R5 = R6 = R7 = R8 = R9 = R10 = R11 = R12.$$

En option, des varistances TV1, TV2, TV3, TV4, TV5 et TV6 sont connectées respectivement en parallèle sur chacun des transistors FET J1, J2, J3, J4, J5 et J6 afin de protéger ces transistors FET contre des surtensions dépassant la tenue en tension du circuit de protection 1.

L'invention concerne également un appareil électrique de mesure ou d'alimentation 8 comportant au moins un tel circuit de protection 1 contre les surtensions. L'appareil électrique 8 peut être implanté dans un disjoncteur, par exemple comme tout ou partie d'un déclencheur destiné à commander l'ouverture du disjoncteur en cas de défaut électrique. L'appareil électrique 8 peut aussi être un appareil de mesure de paramètres électriques tels que tension, fréquence, courant, puissance ou encore énergie dans un réseau électrique. Un tel appareil 8 comporte au moins deux bornes de connexion AC1, AC2 à une source d'énergie électrique 2 et une charge électrique 3 à protéger, ladite charge comportant des entrées 37, 38 de mesure ou d'alimentation. Le dispositif 8 comporte au moins un circuit de protection 1, dont l'entrée 4 est connectée à la borne de connexion AC1, et dont la sortie 5 est connectée à une entrée de mesure ou d'alimentation 37 de la charge électrique 3, pour protéger la charge électrique 3 contre les surtensions transmises par le réseau électrique. Un second circuit de protection 1b peut être utilisé, une entrée 6 étant connectée à la borne de connexion AC2 et une sortie 7 étant connectée à une entrée 38 de la charge électrique 3. Un tel montage présente l'avantage de protéger la charge électrique 3 contre les surtensions de polarité positive ou négative entre les bornes AC1 et AC2 : le circuit de protection 1 assure une protection aux surtensions et une limitation du courant consécutif à une surtension quand la tension sur la borne AC1 est supérieure à la tension sur la borne AC2, et le circuit de protection 1b assure une protection quand la tension sur la borne AC2 est supérieure à la tension sur la borne AC1. Un tel montage évite également un câblage de deux circuits de protection 1 montés tête-bêche sur chaque entrée 4, 6 pour protéger la charge électrique des surtensions de polarité positive ou négative.

L'utilisation d'au moins un circuit de protection 1 selon l'invention est particulièrement intéressante pour protéger une charge électrique 3 comportant un condensateur C connecté entre les entrées de mesure ou d'alimentation 37, 38. En effet le circuit de protection 1 protègera la charge électrique 3 contre les surtensions apparaissant entre les bornes AC1 et AC2 mais aussi limitera à une valeur prédéfinie et maîtrisée, I_lim1, le courant induit par une surtension ou le courant d'appel circulant dans le condensateur C à la mise sous tension de la charge électrique 3. Par conséquence, l'échauffement des composants soumis au courant i ou à la tension Vsd sera limité.

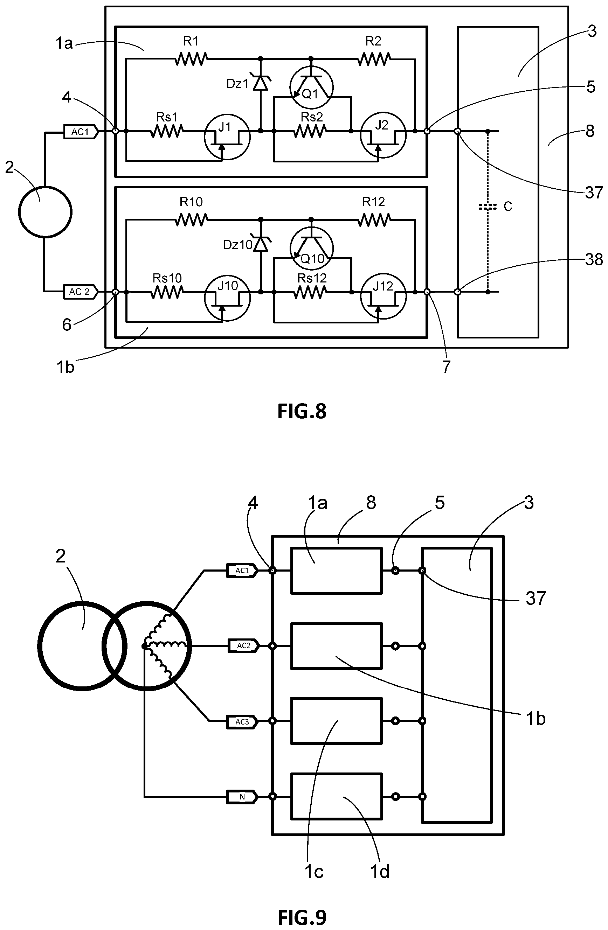

Le schéma de connexion des composants du circuit de protection 1 représenté en figure 8 est un schéma « dual » du schéma représenté en figure 1 : le circuit de limitation de courant 10 est connecté à l'entrée 4 du circuit de protection alors que le premier circuit de contrôle de courant 21 est connecté à la sortie 5. Cette disposition n'affecte pas le fonctionnement du circuit de protection 1 et peut être considérée comme une variante de réalisation.

Bien évidemment, dans une installation triphasée, un troisième circuit de protection 1c pourra être utilisé pour protéger une troisième connexion à une borne AC3, un quatrième circuit de protection 1d pourra être utilisé pour protéger une quatrième connexion à une borne ACN correspondant à une connexion à une ligne de Neutre, et plusieurs modules de contrôle de courant 20, 30, 40 peuvent être utilisés dans chacun des circuits de protection 1a, 1b, 1c et 1d pour accroitre la tenue en tension. A titre d'exemple non limitatif, la figure 9 représente un schéma d'implantation de quatre circuits de protection 1a, 1b, 1c et 1d dans un dispositif de mesure ou d'alimentation 8 alimenté par une source d'énergie triphasée.

En fonctionnement normal, c'est-à-dire sans perturbation, la faible résistance des transistors FET J1, J2 et des résistances série Rs1, Rs2, génère une faible chute de tension et un échauffement peu significatif. Le temps de réponse du circuit de protection, lié aux faibles capacités parasites des composants, est également remarquable. De plus, le circuit de protection 1 a une capacité de tenue illimitée en nombre de surtensions et donc une grande durée de vie puisque l'amplitude du courant i est maîtrisée et la tension perturbatrice est répartie équitablement, et à tout instant, sur le circuit de limitation et sur chaque circuit de contrôle de courant. Enfin, la simplicité de réalisation et d'adaptation à des niveaux de surtension élevés rendent le circuit de protection 1 particulièrement économique et attractif dans le cadre d'une exploitation industrielle.

**Revendications**

1. Circuit de protection (1) d'une charge électrique (3) destiné à être connecté en série entre une source d'énergie électrique (2) et la charge électrique (3) à protéger, la source d'énergie électrique (2) fournissant un courant électrique (i) à la charge électrique (3), ledit circuit de protection étant **caractérisé en ce qu'**il comporte :

   - une entrée (4) de connexion du circuit de protection (1) à la source d'énergie électrique (2),
   - une sortie (5) de connexion à la charge électrique (3),
   - un circuit générateur de tension de référence (13) agencé pour fournir au moins une première tension de référence (Vref1),
   - un circuit de limitation de courant (10), connecté à la sortie (5), ledit circuit de limitation étant agencé pour limiter le courant électrique (i) le traversant,
   - un premier module de contrôle de courant (20), connecté en série d'une part avec le circuit de limitation (10) en un premier point de connexion (25) et d'autre part connecté à l'entrée (4), ledit premier module de contrôle de courant (20) comportant :

      - un premier circuit de contrôle de courant (21) pour contrôler l'amplitude du courant électrique (i) le traversant, et
      - un premier circuit d'équilibrage (22) connecté au générateur de tension (13) pour recevoir la première tension de référence (Vref1) et connecté au premier point de connexion (25) pour recevoir une première tension (Vlim1), le premier circuit d'équilibrage (22) étant agencé pour commander le premier circuit de contrôle de courant (21) de manière de rendre la première tension (Vlim1) égale à la première tension de référence (Vref1), où

         le circuit de limitation de courant (10) comporte, au moins, un premier transistor à effet de champ (J1) de type normalement fermé et une première résistance série (Rs1) connectée entre la grille et la source du premier transistor à effet de champ (J1), le drain étant connecté au premier point de connexion (25), la grille étant connectée à la sortie (5) de connexion du circuit de protection (1), et où
         le premier module de contrôle de courant (20) comporte, au moins :

            - un deuxième transistor à effet de champ (J2) de type normalement fermé et une deuxième résistance série (Rs2) connectée entre la grille et la source du deuxième transistor à effet de champ (J2), le drain étant connecté à l'entrée (4) de connexion du circuit de protection (1), et
            - un premier transistor étant soit:

bipolaire de type NPN (Q1) connecté de telle sorte que :

- le collecteur du premier transistor bipolaire (Q1) soit connecté à la source du deuxième transistor à effet de champ (J2),
- l'émetteur du premier transistor bipolaire (Q1) soit connecté à la grille du deuxième transistor à effet de champ (J2) et au premier point de connexion (25), et que
- la base du premier transistor bipolaire (Q1) soit connectée au générateur de tension de référence (13) pour recevoir la première tension de référence (Vref1) ; soit

type MOSFET connecté de telle sorte que :

- le drain du premier transistor MOSFET soit connecté à la source du deuxième transistor à effet de champ (J2),
- la source du premier transistor MOSFET soit connecté à la grille du deuxième transistor à effet de champ (J2) et au premier point de connexion (25), et que
- la grille du premier transistor MOSFET soit connectée au générateur de tension de référence (13) pour recevoir la première tension de référence (Vref1).

2. Circuit de protection (1) selon la revendication 1 **caractérisé en ce que** le premier et le deuxième transistors à effet de champ (J1, J2) sont fabriqués en carbure de silicium ou en nitrure de gallium.

3. Circuit de protection (1) selon l'une quelconque des revendications précédentes **caractérisé en ce que** le premier transistor est bipolaire de type NPN (Q1).

4. Circuit de protection (1) selon l'une quelconque des revendications précédentes **caractérisé en ce que** le circuit générateur de tension de référence (13) est relié d'une part à l'entrée (4) de connexion du circuit de protection (1) à la source d'énergie électrique (2) et d'autre part à la sortie (5) de connexion du circuit de protection (1) à la charge électrique (3).

5. Circuit de protection (1) selon la revendication précédente **caractérisé en ce que** le circuit générateur de tension de référence (13) comporte une première et une deuxième résistances (R1, R2) connectées en série, de valeur sensiblement égale, et que la première tension de référence (Vref1) est fournie en un deuxième point de connexion (16) entre la première et la deuxième résistance (R1, R2).

6. Circuit de protection (1) selon l'une quelconque des revendications précédentes **caractérisé en ce que** le circuit de limitation de courant (10) limite le courant à une amplitude comprise entre 50 et 500 mA.

7. Circuit de protection (1) contre les surtensions selon l'une quelconque des revendications précédentes **caractérisé en ce que** :

- le générateur de tension de référence (13) génère une deuxième tension de référence (Vref2), d'amplitude supérieure à la première tension de référence Vref1 et que
- un deuxième module de contrôle de courant (30) est connecté en série d'une part avec le premier module de contrôle de courant (20) en un troisième point de connexion (35), et connecté d'autre part à l'entrée (4), ledit deuxième module de contrôle de courant (30) comportant :

- un deuxième circuit de contrôle de courant (31) pour contrôler l'amplitude du courant électrique (i) le traversant, et
- un deuxième circuit d'équilibrage (32) connecté d'une part au générateur de tension de référence (13) pour recevoir la deuxième tension de référence (Vref2) et connecté d'autre part au troisième point de connexion (35) pour recevoir une deuxième tension (Vct1), le deuxième circuit d'équilibrage (32) étant agencé pour commander le deuxième circuit de contrôle de courant (31) pour que la tension au troisième point de connexion (35) soit sensiblement égale à la deuxième tension de référence (Vref2).

8. Circuit de protection (1) selon la revendication 7 **caractérisé en ce que** :

- le générateur de tension de référence (13) génère N tensions de référence (Vrefn) d'amplitude décroissante, N étant supérieur ou égal à 2, et **en ce que**

- le circuit de protection comprend N modules de contrôle de courant (40) connectés en série entre l'entrée (4) et le deuxième module de contrôle de courant (30), chaque module de contrôle de courant (40) comportant une entrée de liaison (En) et une sortie de liaison (Sn), la sortie de liaison d'un module de contrôle de courant (40) étant connectée à une entrée de liaison ($E_{n-1}$) d'un module de contrôle de courant adjacent, chaque module de contrôle de courant (40) recevant une tension de référence (Vrefn) en correspondance avec son ordre de connexion, chaque module de contrôle de courant (40) contrôlant le courant électrique (i) le traversant pour que la tension sur sa sortie (Sn) soit sensiblement égale à la tension de référence (Vrefn) .

9. Appareil électrique de mesure ou d'alimentation (8) comportant des bornes de connexion (AC1, AC2) à une source d'énergie électrique (2) et une charge électrique (3) à protéger, ladite charge comportant des entrées de mesure ou d'alimentation (37, 38), **caractérisé en ce que** l'appareil électrique (8) comporte au moins un circuit de protection contre les surtensions (1) selon l'une des revendications précédentes, ledit, au moins un, circuit de protection (1) étant connecté entre une borne de connexion (AC1, AC2) à la source d'énergie électrique (2) et une entrée de mesure ou d'alimentation (37, 38) de la charge électrique, pour protéger l'entrée de mesure ou d'alimentation (37, 38) de la charge électrique contre les surtensions transmises par la source d'énergie électrique (2).


**Patentansprüche**

1. Schutzschaltkreis (1) für eine elektrische Last (3), der dazu bestimmt ist, zwischen einer elektrischen Energiequelle (2) und der zu schützenden elektrischen Last (3) in Reihe geschaltet zu sein, wobei die elektrische Energiequelle (2) der elektrischen Last (3) einen elektrischen Strom (i) bereitstellt, wobei der Schutzschaltkreis **dadurch gekennzeichnet ist, dass** er Folgendes umfasst:

   - einen Eingang (4) für den Anschluss des Schutzschaltkreises (1) an die elektrische Energiequelle (2),
   - einen Ausgang (5) für den Anschluss an die elektrische Last (3),
   - einen Referenzspannungsgeneratorschaltkreis (13), der dazu angeordnet ist, mindestens eine erste Referenzspannung (Vref1) bereitzustellen,
   - einen Strombegrenzungsschaltkreis (10), der an den Ausgang (5) angeschlossen ist, wobei der Begrenzungsschaltkreis dazu angeordnet ist, den elektrischen Strom (i), der durch ihn hindurch fließt, zu begrenzen,
   - ein erstes Stromsteuermodul (20), das einerseits an einem ersten Anschlusspunkt (25) mit dem Begrenzungsschaltkreis (10) in Reihe geschaltet ist und andererseits an den Eingang (4) angeschlossen ist, wobei das erste Stromsteuermodul (20) Folgendes umfasst:

      - einen ersten Stromsteuerschaltkreis (21) zum Steuern der Amplitude des elektrischen Stroms (i), der durch ihn hindurch fließt, und
      - einen ersten Ausgleichsschaltkreis (22), der an den Spannungsgenerator (13) angeschlossen ist, um die erste Referenzspannung (Vref1) zu empfangen, und an den ersten Anschlusspunkt (25) angeschlossen ist, um eine erste Spannung (Vlim1) zu empfangen, wobei der erste Ausgleichsschaltkreis (22) dazu angeordnet ist, den ersten Stromsteuerschaltkreis (21) so anzusteuern, dass die erste Spannung (Vlim1) gleich der ersten Referenzspannung (Vref1) wird, wobei

      der Strombegrenzungsschaltkreis (10) mindestens einen ersten selbstsperrenden Feldeffekttransistor (J1) und einen ersten Reihenwiderstand (Rs1), der zwischen dem Gate und der Source des ersten Feldeffekttransistors (J1) angeschlossen ist, umfasst, wobei die Drain an den ersten Anschlusspunkt (25) angeschlossen ist, wobei das Gate an den Ausgang (5) für den Anschluss des Schutzschaltkreises (1) angeschlossen ist, und wobei
      das erste Stromsteuermodul (20) mindestens Folgendes umfasst:

         - einen zweiten selbstsperrenden Feldeffekttransistor (J2) und einen zweiten Reihenwiderstand (Rs2), der zwischen dem Gate und der Source des zweiten Feldeffekttransistors (J2) angeschlossen ist, wobei die Drain an den Eingang (4) für den Anschluss des Schutzschaltkreises (1) angeschlossen ist, und
         - einen ersten Transistor, der Folgendes sein kann:

            entweder ein Bipolartransistor vom Typ npn (Q1), der so angeschlossen ist, dass:

               - der Kollektor des ersten Bipolartransistors (Q1) an die Source des zweiten Feldeffekttransistors (J2) angeschlossen ist,
- der Emitter des ersten Bipolartransistors (Q1) an das Gate des zweiten Feldeffekttransistors (J2) und an den ersten Anschlusspunkt (25) angeschlossen ist und dass
- die Basis des ersten Bipolartransistors (Q1) an den Referenzspannungsgenerator (13) angeschlossen ist, um die erste Referenzspannung (Vref1) zu empfangen;

oder ein Transistor vom Typ MOSFET, der so angeschlossen ist, dass:

- die Drain des ersten MOSFET-Transistors an die Source des zweiten Feldeffekttransistors (J2) angeschlossen ist,
- die Source des ersten MOSFET-Transistors an das Gate des zweiten Feldeffekttransistors (J2) und an den ersten Anschlusspunkt (25) angeschlossen ist und dass
- das Gate des ersten MOSFET-Transistors an den Referenzspannungsgenerator (13) angeschlossen ist, um die erste Referenzspannung (Vref1) zu empfangen.

2. Schutzschaltkreis (1) nach Anspruch 1, **dadurch gekennzeichnet, dass** der erste und der zweite Feldeffekttransistor (J1, J2) aus Siliciumcarbid oder aus Galliumnitrid hergestellt sind.

3. Schutzschaltkreis (1) nach einem der vorhergehenden Ansprüche, **dadurch gekennzeichnet, dass** der erste Transistor ein Bipolartransistor vom Typ npn (Q1) ist.

4. Schutzschaltkreis (1) nach einem der vorhergehenden Ansprüche, **dadurch gekennzeichnet, dass** der Referenzspannungsgeneratorschaltkreis (13) einerseits mit dem Eingang (4) für den Anschluss des Schutzschaltkreises (1) an die elektrische Energiequelle (2) und andererseits mit dem Ausgang (5) für den Anschluss des Schutzschaltkreises (1) an die elektrische Last (3) verbunden ist.

5. Schutzschaltkreis (1) nach dem vorhergehenden Anspruch, **dadurch gekennzeichnet, dass** der Referenzspannungsgeneratorschaltkreis (13) einen ersten und einen zweiten Widerstand (R1, R2) umfasst, die in Reihe geschaltet sind und einen im Wesentlichen gleichen Wert besitzen, und dass die erste Referenzspannung (Vref1) an einem zweiten Anschlusspunkt (16) zwischen dem ersten und dem zweiten Widerstand (R1, R2) bereitgestellt wird.

6. Schutzschaltkreis (1) nach einem der vorhergehenden Ansprüche, **dadurch gekennzeichnet, dass** der Strombegrenzungsschaltkreis (10) den Strom auf eine Amplitude zwischen 50 und 500 mA begrenzt.

7. Schutzschaltkreis (1) gegen Überspannungen nach einem der vorhergehenden Ansprüche, **dadurch gekennzeichnet, dass**:

- der Referenzspannungsgenerator (13) eine zweite Referenzspannung (Vref2) generiert, deren Amplitude größer als die erste Referenzspannung Vref1 ist, und dass
- ein zweites Stromsteuermodul (30) einerseits an einem dritten Anschlusspunkt (35) mit dem ersten Stromsteuermodul (20) in Reihe geschaltet ist und andererseits an den Eingang (4) angeschlossen ist, wobei das zweite Stromsteuermodul (30) Folgendes umfasst:

- einen zweiten Stromsteuerschaltkreis (31) zum Steuern der Amplitude des elektrischen Stroms (i), der durch ihn hindurch fließt, und
- einen zweiten Ausgleichsschaltkreis (32), der einerseits an den Referenzspannungsgenerator (13) angeschlossen ist, um die zweite Referenzspannung (Vref2) zu empfangen, und andererseits an den dritten Anschlusspunkt (35) angeschlossen ist, um eine zweite Spannung (Vct1) zu empfangen, wobei der zweite Ausgleichsschaltkreis (32) dazu angeordnet ist, den zweiten Stromsteuerschaltkreis (31) so anzusteuern, dass die Spannung am dritten Anschlusspunkt (35) im Wesentlichen gleich der zweiten Referenzspannung (Vref2) ist.

8. Schutzschaltkreis (1) nach Anspruch 7, **dadurch gekennzeichnet, dass**:

- der Referenzspannungsgenerator (13) N Referenzspannungen (Vrefn) mit abnehmender Amplitude generiert, wobei N größer als oder gleich 2 ist, und dass
- der Schutzschaltkreis N Stromsteuermodule (40) beinhaltet, die zwischen dem Eingang (4) und dem zweiten Stromsteuermodul (30) in Reihe geschaltet sind, wobei jedes Stromsteuermodul (40) einen Verbindungseingang (En) und einen Verbindungsausgang (Sn) umfasst, wobei der Verbindungsausgang eines Stromsteuermoduls (40) an einen Verbindungseingang (E$_{n-1}$) eines angrenzenden Stromsteuermoduls (40) angeschlossen ist, wobei jedes Stromsteuermodul (40) eine Referenzspannung (Vrefn) entsprechend seiner Anschlussrangfolge empfängt, wobei jedes Stromsteuermodul (40) den elektrischen Strom (i), der durch es hindurch fließt, steuert, damit die Spannung an seinem Ausgang (Sn) im Wesentlichen gleich der Referenzspannung (Vrefn) ist.

9. Elektrisches Mess- oder Versorgungsgerät (8), das Klemmen (AC1, AC2) für den Anschluss an eine elektrische Energiequelle (2) und eine zu schützende elektrische Last (3) umfasst, wobei die Last Mess- oder Versorgungseingänge (37, 38) umfasst, **dadurch gekennzeichnet, dass** das elektrische Gerät (8) mindestens einen Schutzschaltkreis gegen Überspannungen (1) nach einem der vorhergehenden Ansprüche umfasst, wobei der mindestens eine Schutzschaltkreis (1) zwischen einer Klemme (AC1, AC2) für den Anschluss an die elektrische Energiequelle (2) und einem Mess- oder Versorgungseingang (37, 38) der elektrischen Last angeschlossen ist, um den Mess- oder Versorgungseingang (37, 38) der elektrischen Last vor Überspannungen, die durch die elektrische Energiequelle (2) übertragen werden, zu schützen.

## Claims

1. Protective circuit (1) for protecting an electrical load (3), intended to be connected in series between an electrical energy source (2) and the electrical load (3) to be protected, the electrical energy source (2) supplying an electric current (i) to the electrical load (3), said protective circuit being **characterized in that** it comprises:

   - a connection input (4) for connecting the protective circuit (1) to the electrical energy source (2),
   - a connection output (5) for connection to the electrical load (3),
   - a reference voltage generator circuit (13) designed to supply at least a first reference voltage (Vref1),
   - a current limiting circuit (10), connected to the output (5), said limiting circuit being designed to limit the electric current (i) flowing through it,
   - a first current monitoring module (20), connected in series firstly with the limiting circuit (10) at a first connection point (25) and secondly connected to the input (4), said first current monitoring module (20) comprising:

      - a first current monitoring circuit (21) for monitoring the amplitude of the electric current (i) flowing through it, and
      - a first balancing circuit (22) connected to the voltage generator (13) so as to receive the first reference voltage (Vref1) and connected to the first connection point (25) so as to receive a first voltage (Vlim1), the first balancing circuit (22) being designed to control the first current monitoring circuit (21) so as to make the first voltage (Vlim1) equal to the first reference voltage (Vref1), wherein the current limiting circuit (10) comprises at least a first normally closed field-effect transistor (J1) and a first series resistor (Rs1) connected between the gate and the source of the first field-effect transistor (J1), the drain being connected to the first connection point (25), the gate being connected to the connection output (5) of the protective circuit (1), and wherein the first current monitoring module (20) comprises at least:
   - a second normally closed field-effect transistor (J2) and a second series resistor (Rs2) connected between the gate and the source of the second field-effect transistor (J2), the drain being connected to the connection input (4) of the protective circuit (1), and
   - a first transistor being either:

      an NPN bipolar transistor (Q1) connected such that:

         - the collector of the first bipolar transistor (Q1) is connected to the source of the second field-effect transistor (J2),
         - the emitter of the first bipolar transistor (Q1) is connected to the gate of the second field-effect transistor (J2) and to the first connection point (25), and that
         - the base of the first bipolar transistor (Q1) is connected to the reference voltage generator (13) so as to receive the first reference voltage (Vref1); or

      a MOSFET transistor connected such that:

         - the drain of the first MOSFET transistor is connected to the source of the second field-effect transistor (J2),

- the source of the first MOSFET transistor is connected to the gate of the second field-effect transistor (J2) and to the first connection point (25), and that
- the gate of the first MOSFET transistor is connected to the reference voltage generator (13) so as to receive the first reference voltage (Vref1).

2. Protective circuit (1) according to Claim 1, **characterized in that** the first and the second field-effect transistors (J1, J2) are made of silicon carbide or of gallium nitride.

3. Protective circuit (1) according to either one of the preceding claims, **characterized in that** the first transistor is an NPN bipolar transistor (Q1).

4. Protective circuit (1) according to any one of the preceding claims, **characterized in that** the reference voltage generator circuit (13) is connected firstly to the connection input (4) for connecting the protective circuit (1) to the electrical energy source (2) and secondly to the connection output (5) for connecting the protective circuit (1) to the electrical load (3).

5. Protective circuit (1) according to the preceding claim, **characterized in that** the reference voltage generator circuit (13) comprises a first and a second resistor (R1, R2) connected in series, of substantially equal value, and that the first reference voltage (Vref1) is supplied at a second connection point (16) between the first and the second resistor (R1, R2).

6. Protective circuit (1) according to any one of the preceding claims, **characterized in that** the current limiting circuit (10) limits the current to an amplitude of between 50 and 500 mA.

7. Protective circuit (1) for protecting against overvoltages according to any one of the preceding claims, **characterized in that**:

   - the reference voltage generator (13) generates a second reference voltage (Vref2), of amplitude greater than the first reference voltage (Vref1), and that
   - a second current monitoring module (30) is connected in series firstly with the first current monitoring module (20) at a third connection point (35), and connected secondly to the input (4), said second current monitoring module (30) comprising:

      - a second current monitoring circuit (31) for monitoring the amplitude of the electric current (i) flowing through it, and
      - a second balancing circuit (32) connected firstly to the reference voltage generator (13) so as to receive the second reference voltage (Vref2) and connected secondly to the third connection point (35) so as to receive a second voltage (Vct1), the second balancing circuit (32) being designed to control the second current monitoring circuit (31) so that the voltage at the third connection point (35) is substantially equal to the second reference voltage (Vref2).

8. Protective circuit (1) according to Claim 7, **characterized in that**:

   - the reference voltage generator (13) generates N reference voltages (Vrefn) of decreasing amplitude, N being greater than or equal to 2, and **in that**
   - the protective circuit comprises N current monitoring modules (40) connected in series between the input (4) and the second current monitoring module (30), each current monitoring module (40) comprising a connection input (En) and a connection output (Sn), the connection output of a current monitoring module (40) being connected to a connection input ($E_{n-1}$) of an adjacent current monitoring module, each current monitoring module (40) receiving a reference voltage (Vrefn) corresponding to its order of connection, each current monitoring module (40) monitoring the electric current (i) flowing through it so that the voltage on its output (Sn) is substantially equal to the reference voltage (Vrefn).

9. Electrical measuring or power supply unit (8) comprising connection terminals (AC1, AC2) for connection to an electrical energy source (2) and an electrical load (3) to be protected, said load comprising measuring or power supply inputs (37, 38), **characterized in that** the electrical unit (8) comprises at least one protective circuit for protecting against overvoltages (1) according to one of the preceding claims, said at least one protective circuit (1) being connected between a connection terminal (AC1, AC2) for connection to the electrical energy source (2) and a measuring or power supply input (37, 38) of the electrical load, so as to protect the measuring or power supply input (37, 38) of the electrical load against overvoltages transmitted by the electrical energy source (2).

**FIG.1**

**FIG.2**

**FIG.3**

**FIG.4**

FIG.5

**FIG.6**

**FIG.7**

**FIG.8**

**FIG.9**

## RÉFÉRENCES CITÉES DANS LA DESCRIPTION

**Documents brevets cités dans la description**

- EP 0497478 A2
- WO 2006129005 A1
- EP 2124310 A1
- EP 2124326 A1
- US 3760228 A